(19) Europäisches Patentamt
European Patent Office
Office européen des brevets

(11) **EP 3 992 057 A1**

(12) **EUROPEAN PATENT APPLICATION**

(43) Date of publication:
**04.05.2022 Bulletin 2022/18**

(21) Application number: **21150795.9**

(22) Date of filing: **08.01.2021**

(51) International Patent Classification (IPC):
**B61L 27/00** *(2022.01)*      **G06N 3/12** *(2006.01)*

(52) Cooperative Patent Classification (CPC):
**G06N 3/126; B61L 27/12; B61L 27/16**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.10.2020 CN 202011192184**

(71) Applicant: **Traffic Control Technology Co., Ltd.**
**Beijing 100070 (CN)**

(72) Inventors:
• **Cao, Nan**
  **BEIJING, 100070 (CN)**
• **Luo, Ming**
  **BEIJING, 100070 (CN)**
• **Zhao, Xingdong**
  **BEIJING, 100070 (CN)**

(74) Representative: **Eisenführ Speiser**
**Patentanwälte Rechtsanwälte PartGmbB**
**Johannes-Brahms-Platz 1**
**20355 Hamburg (DE)**

(54) **PASSENGER-ORIENTED TRANSFER SYNCHRONIZATION OPTIMIZATION METHOD AND PASSENGER-ORIENTED TRANSFER SYNCHRONIZATION OPTIMIZATION DEVICE**

(57)     Embodiments of the present application provide a passenger-oriented transfer synchronization optimization method and a passenger-oriented transfer synchronization optimization device, in which minimizing average waiting time of passengers is taken as an optimization objective, and constraint conditions are determined based on the transfer-related information; an arrival time and a departure time of each train is adjusted on an original train diagram of lines to be adjusted, and an adjusted train diagram is determined; and the trains on the lines to be adjusted are controlled based on the adjusted train diagram. Urban rail transit train diagrams for complex lines can be made, and no manual participation is required when adjusting the train diagrams, which can not only improve the adjustment efficiency, but also ensure the adjustment effect by avoiding errors caused by manual adjustments. By controlling the trains on the lines to be adjusted through the adjusted train diagram, the transfer efficiency of passengers can be improved when making transfers, and all-day transfer synchronizations can be optimized, thereby solving the problems of low efficiency and non-refined operation in making train diagrams, and providing technical and algorithm support for automatically making train diagrams.

| |
|---|
| Obtaining transfer-related information including line network topology information, train diagram information, train operating data, and passenger flow data at each transfer station — S1 |
| Taking minimizing average waiting time of passengers as an optimization objective, and determining constraint conditions based on the transfer-related information; adjusting an arrival time and a departure time of each train on an original train diagram of lines to be adjusted, and determining an adjusted train diagram — S2 |
| Controlling the trains on the lines to be adjusted based on the adjusted train diagram — S3 |

**Fig. 1**

**Description**

**CROSS-REFERENCE TO RELATED APPLICATION**

The present application claims priority to Chinese Application No. 2020111921848 filed on October 30, 2020, entitled "Passenger-Oriented Transfer Synchronization Optimization Method and Passenger-Oriented Transfer Synchronization Optimization Device," which is hereby incorporated by reference in its entirety.

**FIELD OF TECHNOLOGY**

The present application relates to the technical field of rail transit, and more particularly, to a passenger-oriented transfer synchronization optimization method and a passenger-oriented transfer synchronization optimization device.

**BACKGROUND**

With the gradual formation of urban rail transit network, passenger flows usually transfer between lines to reach their destinations. Therefore, more consideration should be given to the travel demands of transfer passengers in the process of making a train diagram.

At present, urban rail transit train diagrams are mainly made for single lines to match the travel demands of passengers under the limitation of line resources and train resources. During the processing, appropriate consideration will be given to the need for transfer synchronizations to avoid "just miss" and long waiting time. However, the accuracy of these adjustments is not sufficient. When a line in the main transfer direction is adjusted, the train diagram of the related lines with transfer relation should be adjusted accordingly to ensure the effect of the transfer synchronization. In this process, most of these works are manually proofread, adjusted and confirmed one by one, resulting in low adjustment efficiency and no guarantee of adjustment effect. Currently, there is no refined automatic optimization method for this type of transfer synchronization.

**SUMMARY**

Embodiments of the present application provide a passenger-oriented transfer synchronization optimization method and a passenger-oriented transfer synchronization optimization device, so as to overcome the defects in the related art.

An embodiment of the present application provides a passenger-oriented transfer synchronization optimization method, including:

obtaining transfer-related information including line network topology information, train diagram information, train operating data, and passenger flow data at each transfer station;

taking minimizing average waiting times of passengers as an optimization objective, and determining constraint conditions based on the transfer-related information; adjusting an arrival time and a departure time of each train on an original train diagram of lines to be adjusted, and determining an adjusted train diagram; and

controlling the trains on the lines to be adjusted based on the adjusted train diagram.

In the passenger-oriented transfer synchronization optimization method according to an embodiment of the present application, the taking minimizing average waiting time of passengers as an optimization objective, and determining constraint conditions based on the transfer-related information; adjusting an arrival time and a departure time of each train on an original train diagram of lines to be adjusted, and determining an adjusted train diagram includes:

taking minimizing average waiting time of passengers as an optimization objective, and determining constraint conditions based on the transfer-related information; determining an optimal adjustment amount of arrival time and the departure time of each train on the original train diagram using a genetic algorithm; and

determining the adjusted train diagram based on the optimal adjustment amount of arrival time and the departure time of each train on the original train diagram.

In the passenger-oriented transfer synchronization optimization method according to an embodiment of the present application, the determining an optimal adjustment amount of arrival time and the departure time of each train on the original train diagram using genetic algorithm includes:

taking arrival time and the departure time of each train on the original train diagram as an individual, the adjustment amount of the arrival time and the departure time of each train on the original train diagram as an individual gene, and the optimization objective as a fitness function, and performing crossover operations on the individuals and performing mutation operations on the individuals to generate new populations; and

determining the individual gene in the population of a last generation to be the optimal adjustment amount of the arrival time and the departure time of each train when it is determined that a number of generated populations reaches a preset number or the populations of multiple adjacent generations have a same value of the fitness function.

In the passenger-oriented transfer synchronization optimization method according to an embodiment of the present application, the performing crossover operations on the individuals includes: performing crossover operations on the individuals based on a simulated binary crossover operator.

In the passenger-oriented transfer synchronization optimization method according to an embodiment of the present application, the constraint conditions include train operation constraints;
the determining constraint conditions based on the transfer-related information includes:

determining an interval running time limit and a stopping time limit in the train operation constraints based on an arrival time and a stopping time of the train at any station, and a departure time of the train at a previous station of the any station; and

determining a missed time limit in the train operation constraint conditions based on the departure time of the train on a connecting line at the transfer station and the arrival time of the train on a current line at the transfer station when a current transfer is determined to be a cross-platform transfer.

In the passenger-oriented transfer synchronization optimization method according to an embodiment of the present application, the constraint conditions include constraints on turnaround of train set;
the determining constraint conditions based on the transfer-related information includes:
for a switch-back station, determining the constraints on turnaround of train set based on the arrival time of the train after turning back at the switch-back station and the departure time of the train before turning back at the switch-back station.

In the passenger-oriented transfer synchronization optimization method according to an embodiment of the present application, the constraint conditions include signal safety constraints;
the determining constraint conditions based on the transfer-related information includes:
determining the signal safety constraints based on a departure headway of two adjacent trains on a same line.

An embodiment of the present application further provides a passenger-oriented transfer synchronization optimization device, including:

an information acquirer configured to obtain transfer-related information including line network topology information, train diagram information, train operating data, and passenger flow data at each transfer station;

an adjuster configured to take minimizing average waiting time of passengers as an optimization objective, and determine constraint conditions based on the transfer-related information; adjusting an arrival time and a departure time of each train on an original train diagram of lines to be adjusted, and determine an adjusted train diagram; and

an controller configured to control the trains on the lines to be adjusted based on the adjusted train diagram.

An embodiment of the present application further provides an electronic device, including: a memory, a processor, and a computer program stored in the memory and executable by the processor, wherein steps of any of the above-mentioned passenger-oriented transfer synchronization optimization method are implemented when the processor executes the computer program.

An embodiment of the present application further provides a non-transitory computer readable storage medium, in which a computer program is stored, wherein steps of any of the above-mentioned the passenger-oriented transfer synchronization optimization method are implemented when the computer program is executed by the processor.

Embodiments of the present application provide a passenger-oriented transfer synchronization optimization method and a passenger-oriented transfer synchronization optimization device, in which minimizing average waiting time of passengers is taken as an optimization objective, and constraint conditions are determined based on the transfer-related information; the arrival time and the departure time of each train is adjusted on an original train diagram of lines to be adjusted, and an adjusted train diagram is determined; and the trains on the lines to be adjusted are controlled based on the adjusted train diagram. Urban rail transit train diagrams for complex lines can be made, and no manual participation is required when adjusting the train diagrams, which can not only improve the adjustment efficiency, but also ensure the adjustment effect by avoiding errors caused by manual adjustments. By controlling the trains on the lines to be adjusted through the adjusted train diagram, the transfer efficiency of passengers can be improved when making transfers, and all-day transfer synchronizations can be optimized, thereby solving the problems of low efficiency and non-refined operation in making train diagrams, and providing technical and algorithm support for automatically making the train diagrams.

BRIEF DESCRIPTION OF THE DRAWINGS

In order to make the technical solutions in the embodiments of the present application or the related art clearer, drawings needed in the embodiments or the description of the related art is briefly introduced as follows. Obviously, the drawings in the following description are only some of the embodiments of the present application. For those of ordinary skill in the art, other drawings can be obtained based on these drawings without paying any creative effort.

FIG. 1 is schematic flowchart of a passenger-oriented transfer synchronization optimization method according to an embodiment of the present application;

FIG. 2 is a schematic structural diagram of a line topology of urban rail transit according to an embodiment of the present application;

FIG. 3 is complete schematic flowchart of a passenger-oriented transfer synchronization optimization method according to an embodiment of the present application;

FIG. 4 is a schematic structural diagram of a passenger-oriented transfer synchronization optimization device according to an embodiment of the present application; and

FIG. 5 is a schematic structural diagram of an electronic device according to an embodiment of the present application.

DETAILED DESCRIPTION

In order to specify the objectives, technical solutions and advantages of the embodiments of the present application, the technical solutions in the embodiments of the present application will be described clearly and completely in conjunction with the accompanying drawings in the embodiments of the present application. Obviously, the embodiments described below are part of the embodiments of the present application, rather than all of the embodiments. Based on the embodiments in the present application, all other embodiments obtained by those of ordinary skill in the art without creative effort shall fall within the protection scope of the present application.

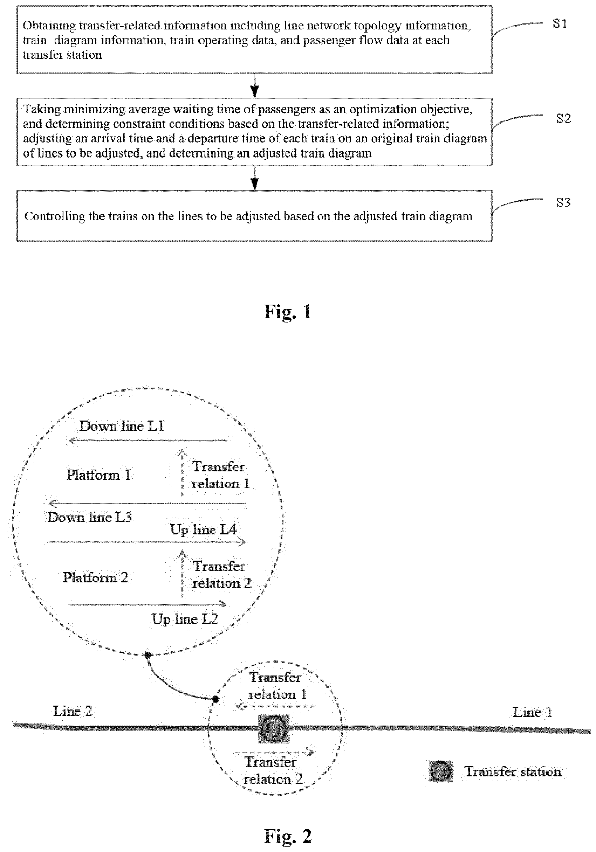

FIG. 1 is schematic flowchart of a passenger-oriented transfer synchronization optimization method according to an embodiment of the present application. As shown in FIG. 1, the method includes:

S1, obtaining transfer-related information including line network topology information, train diagram information, train operating data, and passenger flow data at each transfer station;

S2, taking minimizing average waiting time of passengers as an optimization objective, and determining constraint conditions based on the transfer-related information; adjusting an arrival time and a departure time of each train on an original train diagram of lines to be adjusted, and determining an adjusted train diagram; and

S3, controlling the trains on the lines to be adjusted based on the adjusted train diagram.

The passenger-oriented transfer synchronization optimization method according to the embodiments of the present application is executed by a passenger-oriented transfer synchronization optimization device for adjusting the train diagram, so as to ensure that the trains are controlled through the adjusted train diagram, allowing passengers to wait a shorter time for a smooth transfer when transferring. In the embodiments of the present application, the transfer synchronization of each train during the whole operation period can be optimized.
Firstly, the step S1 is executed. The transfer-related information refers to various basic data required for the optimization of transfer synchronization of urban rail transit systems, and is information related to train transfers, which may include line network topology information, train diagram information, train operating data, and passenger flow data. The line network topology information refers to the topological relation used to describe transfer-related operating lines and transfer stations. Each operating line may include multiple stations, each of which may be used as a transfer station. In the embodiment of the present application, the operating lines can be divided into target lines and lines to be adjusted. The line whose train diagram needs to be adjusted is referred as to the line to be adjusted, and the its matched target line is referred as to the target line.

FIG. 2 is a schematic structural diagram of a line topology of urban rail transit according to an embodiment of the present application. As shown in FIG. 2, the line topology contains two lines, i.e., line 1 and line 2, and the transfer mode is terminal transfer. line 1 and line 2 are connected through a transfer station, a transfer from line 1 to line 2 is a transfer relationship 1, and a transfer from line 2 to line 1 is a transfer relationship 2. The transfer station includes a platform 1 and a platform 2, the line 1 includes a down line L1 and an up line L2, and the line 2 includes a down line L3 and an up line L4, with a transfer from the down line L3 to the down line L1 being the transfer relation 1 and a transfer from the up line L2 to the up line L4 being the transfer relationship 2.

The transfer relation of the line topology shown in FIG. 2 is also shown in Table 1.

Table 1: Transfer relation of line topology

| Transfer relation | Current line | Connecting line |
|---|---|---|
| 1 | L1 | L3 |
| 2 | L2 | L4 |

Wherein the current line refers to the line where the train is located before the passenger transfers, and the connecting line refers to the line where the train is located after the passenger transfers.

Table 2: Part of the information of the train diagram information

| Line | Station | Train set | Train number | Arrival time | Departure time |
|---|---|---|---|---|---|
| L1 | A | T01 | 010001 | 06:33:13 | 06:33:58 |
| L1 | A | T02 | 020002 | 06:37:43 | 06:38:28 |
| L1 | A | T03 | 030003 | 06:41:43 | 06:42:28 |
| ... | ... | ... | ... | ... | ... |

The train diagram information is configured to describe the arrival time and the departure time of each train on each line at the transfer station, and may include the train diagram of the adjusted target line and the original train diagram of the line to be adjusted. In the embodiment of the present application, the adjustment is made on the basis of the original train diagram of the line to be adjusted, which has the transport capacity to meet the basic passenger flow demand of the line. Part of the information of the train diagram information is shown in Table 2.

The train operating data is the relevant data configured to describe the operation of the train under a specific signal system, and may include train interval running time, transfer walking time, line tracking time, switch-back time, statistical data on the execution of an operation plan, etc.

The train operating data is shown in Table 3.

Table 3: Train operating data

| Parameters | Unit |
|---|---|
| Inter-station running time | Second |
| Stopping time at station | Second |
| Shortest switch-back time at switch-back station | Second |
| Average transfer walking time at transfer station [s] | Second |
| Platform clearance time | Second |
| Minimum departure headway (signal conditions) | Second |
| Maximum departure headway (service frequency) | Second |
| Train departure headway in this period based on passenger flow | Second |
| Time for first train | hh: mm: ss |
| Time for last train | hh: mm: ss |

Passenger flow data refers to a number of passengers transferring in all directions at the transfer station throughout the day. The Passenger flow data is shown in Table 4.

Table 4: Passenger flow data

| Current line | Connecting line | Time range | Number of transfer passengers |
|---|---|---|---|
| L1 | L3 | 0:00:00-0:30:00 | P1 |
| L1 | L3 | 0:30:00-1:00:00 | P2 |
| ... | ... | ... | ... |
| L2 | L4 | 0:00:00-0:30:00 | Px |
| L2 | L4 | 0:30:00-1:00:00 | Py |
| ... | ... | ... | ... |

Then the step S2 is executed. At present, urban rail transit train diagrams are made mainly for single lines. Diagram editors usually first consider the passenger flow demand on the present line to make an operation plan, and then consider the transfer synchronization between the present line and other lines. Therefore, for this method, the arrival time and the departure time of each train on the original train diagram will be adjusted based on the original train diagram, so as to minimize the average waiting time for transfer passengers.

$$X = \{x_1, x_2, ..., x_i, ..., x_n\}$$

wherein $x_i$ is an adjustment amount of the arrival time and the departure time of train $i$ on the line to be adjusted.

In the embodiment of the present application, the average waiting time $Z$ for the transfer passengers is expressed by the following equation:

$$Z = \sum f(X)Q = \sum \alpha_{ij} tw_{ij} q_{ij} / \sum q_{ij}$$

where $\alpha_{ij}$ represents the transfer relation between train $i$ and train $j$. If the transfer from train $i$ to train $j$ is successful, then $\alpha_{ij}$ = 1; if the transfer from train $i$ to train $j$ fails, then $\alpha_{ij}$ = 0. $tw_{ij}$ represents the transfer waiting time during the transfer from train $i$ to train $j$, and $q_{ij}$ represents the number of passengers transferred from train $i$ to train $j$.

With min $Z$ being taken as the optimization objective, the constraint conditions are determined based on the transfer-related information obtained in S1, the arrival time of each train is adjusted on the original train diagram of the line to be adjusted, and the adjusted train diagram is determined. In other words, when arrival time and the departure time of each train on the original train diagram of the line to be adjusted is adjusted, the constraint conditions need to be satisfied and the optimization objectives need to be met, so that arrival time and the departure time of each train that can achieve the optimization objective is determined, namely, the adjusted train diagram is determined.

Finally, the step S3 is executed to control the trains on the line to be adjusted through the adjusted train diagram, so that the transfer efficiency can be improved when passengers make transfers.

In the embodiment of the present application provides a passenger-oriented transfer synchronization optimization method, minimizing average waiting time of passengers is taken as an optimization objective, and constraint conditions are determined based on the transfer-related information; the arrival time and the departure time of each train is adjusted on an original train diagram of lines to be adjusted, and an adjusted train diagram is determined; and the trains on the lines to be adjusted are controlled based on the adjusted train diagram. Urban rail transit train diagrams for complex lines can be made, and no manual participation is required when adjusting the train diagrams, which can not only improve the adjustment efficiency, but also ensure the adjustment effect by avoiding errors caused by manual adjustments. By controlling the trains on the lines to be adjusted through the adjusted train diagram, the transfer efficiency of passengers can be improved when making transfers, and all-day transfer synchronizations can be optimized, thereby solving the problems of low efficiency and non-refined operation in the compilation of train diagrams, and providing technical and algorithm support for automatic compilation of train diagrams.

On the basis of the foregoing embodiment, in the passenger-oriented transfer synchronization optimization method according to an embodiment of the present application, the taking minimizing average waiting time of passengers as an optimization objective, and determining constraint conditions based on the transfer-related information; adjusting an arrival time and a departure time of each train on an original train diagram of lines to be adjusted, and determining an adjusted train diagram includes:

taking minimizing average waiting time of passengers as an optimization objective, and determining constraint conditions based on the transfer-related information; determining an optimal adjustment amount of the arrival time and the departure time of each train on the original train diagram using genetic algorithm; and

determining the adjusted train diagram based on the optimal adjustment amount of arrival time and the departure time of each train on the original train diagram.

In the passenger-oriented transfer synchronization optimization method according to the embodiment of the present application, the arrival time of each train is adjusted on the original train diagram of the line to be adjusted, and a mixed integer programming model for transfer synchronization optimization can be constructed when determining the adjusted train diagram. The model can be used for taking the minimizing average waiting time of passengers as the optimization objective, and determining the constraint conditions in combination with transfer-related information. Moreover, in order to ensure a certain solution efficiency, the genetic algorithm is used to quickly solve the characteristics of the mixed integer programming model, and then the adjusted train diagram is determined based on the optimal adjustment amount of arrival time and the departure time of each train on the original train diagram.

On the basis of the foregoing embodiments, in the passenger-oriented transfer synchronization optimization method according to an embodiment of the present application, the determining an optimal adjustment amount of the arrival time and the departure time of each train on the original train diagram using a genetic algorithm includes:

taking the arrival time and the departure time of each train on the original train diagram as an individual, the adjustment amount of the arrival time and the departure time of each train on the original train diagram as an individual gene, and the optimization objective as a fitness function, and performing crossover operations on the individuals and performing mutation operations on the individuals to generate new populations; and

determining the individual gene in the population of a last generation to be the optimal adjustment amount of arrival time and the departure time of each train when it is determined that a number of generated populations reaches a preset number or the populations of multiple adjacent generations have a same value of the fitness function.

When genetic algorithm is used to determine the optimal adjustment amount of the arrival time and the departure time of each train on the original train diagram, the arrival time and the departure time of each train on the original train diagram is taken as an individual, the adjustment amount of arrival time and the departure time of each train on the original train diagram is taken as an individual gene, and the optimization objective is taken as a fitness function. The individual gene is the optimization variable in the genetic algorithm, and the optimization variable is encoded in the embodiment of the present application, when necessary, a real number encoding method can be adopted. In the mixed integer programming model, the up line and down line of the train can be treated as different lines.

Firstly, the population composed of all individuals is initialized, and the adjustment amount of the arrival time and the departure time is randomly generated within a certain range for the arrival time and the departure time of each train. In order to ensure the feasibility of initialization, an adjusted train diagram can be generated based on the initialized population, and then the feasibility of the population can be verified based on the constraint conditions; that is, determining whether the adjusted train diagram generated based on the initialized population satisfies the constraint conditions, and if so, e.g., the adjusted train diagram generated based on the initialized population satisfies the constraint conditions, the initialized population is proven feasible, otherwise the initialized population is proven infeasible.

According to the fitness function, the fitness of each individual in the population is calculated, and crossover operations and mutation operations are performed on each individual to generate a new population. Before crossover operations is performed on individuals, two individuals are compared and the individual having higher fitness is selected based on a tournament selection method and is subjected to subsequent crossover operations to ensure that the individual genes of the individual having higher fitness can be passed to the new generation of populations. When crossover operations are performed on individuals, it is possible to perform crossover operations on individuals based on the single-point crossover working principle of the simulated binary crossover (SBX) operator, so that individual genes in the parent chromosome can be replicated and passed to the offspring chromosome, and the feasibility of the offspring chromosome is verified. If the offspring chromosomes do not meet the constraint conditions, the crossover operation is repeated. The mutation operation can be a single-point mutation operation.

In order to prevent the genetic algorithm from trapping into the local optimum too quickly, an adjustment amount within a certain range is randomly generated, and the corresponding individual genes in the offspring individuals are replaced with a certain probability, and the feasibility of the offspring chromosomes is verified. If the offspring chromosomes do not meet the constraint conditions, random numbers are generated again until the constraint conditions are met.

In order to prevent the genes of the individual having highest fitness in the parent generation from being lost in the crossover operations and mutation operations, the concept of elite selection is adopted to replace the individual having the least fitness in the candidate offspring with the optimal individual in the parent generation, and to retain the individual genes of the individual having highest fitness in the parent generation.

Then convergence judgment is performed. If the convergence condition of algorithm is met, the genetic algorithm is terminated and the individual genes in the population of the last generation are determined as the optimal adjustment amount of the arrival time and the departure time for each train. If the convergence condition is not met, a population of the next generation is generated, and crossover operations and mutation operations are continuously performed on each individual in the population of the next generation.

Wherein the convergence condition is that the number of algorithm iterations reaches a preset number, that is, the number of populations generated reaches the preset number; or the value of the fitness function calculated by multiple iterations does not change, that is, the populations of multiple adjacent generations have a same value of the fitness function.

On the basis of the foregoing embodiments, in the passenger-oriented transfer synchronization optimization method according to an embodiment of the present application, the constraint conditions include train operation constraints;

the determining constraint conditions based on the transfer-related information includes:

determining an interval running time limit and a stopping time limit in the train operation constraints based on arrival time and stopping time of the train at any station, and departure time of the train at a previous station of the any station; and

determining a missed time limit in the train operation constraint conditions based on the departure time of the train on a connecting line at the transfer station and the arrival time of the train on a current line at the transfer station when a current transfer is determined to be a cross-platform transfer.

In order to ensure the operation security of the of urban rail transit trains and ensure the quality of service for passengers, in the process of making and adjusting the train diagram, it is necessary to consider the constraints with respect to train operation, that is, train operation constraints.

During the operation of the train, the interval running time limit and the stopping time limit must be met.

$$A_i^{\ s} = D_i^{\ s-1} + R_i^{\ s-1}$$

$$D_i^{\ s} = A_i^{\ s} + S_i^{\ s}$$

wherein $A_i^s$ is the arrival time of train $i$ at station $s$, $D_i^s$ is the departure time of train $i$ at station $s$, $S_i^s$ is the stopping time of train $i$ at station $s$, and $R_i^{s-1}$ is the running time of train $i$ from station $s-1$ to station $s$.

In the process of adjusting the train diagram, "just miss" should be avoided as much as possible. "just miss" refers to the situation in which passengers arrive at the transfer platform and just watch the connecting train leave without being able to make the transfer. This situation will cause strong passenger dissatisfaction and significantly reduce the quality of passenger service. For passage transfers, it is more difficult to control because of the difference in passenger walking time, while for cross-platform transfers, the "just miss" should be avoided as much as possible in that passengers can directly see the situation of the connecting train on the opposite side and the passenger walking time is shorter and the difference is smaller. Therefore, in the case of cross-platform transfer, if a train on the current line fails to provide a successful transfer to a train on the connecting line, the connecting train should leave the platform before the current train enters the station. That is, in the case of cross-platform transfer, the missed time limit is that the departure time of the train on the connecting line at the transfer station is earlier than the arrival time of the train on the current line at the transfer station, or the departure time of the train on the connecting line at the transfer station is later than the arrival time of the train on the current line at the transfer station, with the time difference between the two being greater than or equal to the transfer walking time of the passenger at the transfer station to ensure that the passenger can successfully transfer at the transfer station.

On the basis of the foregoing embodiments, in the passenger-oriented transfer synchronization optimization method according to an embodiment of the present application, the constraint conditions include constraints on turnaround of train set;

the determining constraint conditions based on the transfer-related information includes:

for a switch-back station, determining the constraints on turnaround of train set based on the arrival time of the train after turning back at the switch-back station and the departure time of the train before turning back at the switch-back station.

The constraints on turnaround of train set refer to: for the switch-back station, the arrival time of the train after the switch-back station and the departure time of the train before the switch-back station must be greater than a minimum switch-back time, that is:

$$A_i^{ss+1} - D_i^{ss} \geq \min TB^{ss}$$

wherein ss is the switch-back station, and min $TB^{ss}$ is the minimum turn-round time of the train at the turn-round station ss.

On the basis of the foregoing embodiments, in the passenger-oriented transfer synchronization optimization method according to an embodiment of the present application, the constraint conditions include signal safety constraints; the determining constraint conditions based on the transfer-related information includes:

determining the signal safety constraints based on a departure headway of two adjacent trains on a same line.

The signal safety constraints refer to: in order to ensure operational safety, a certain departure headway must be guaranteed for train operation, that is:

$$D_{i+1} - D_i \geq \min H$$

wherein min H is the minimum departure headway under the signal system condition of the section.

In addition, due to the uneven time distribution of passenger flow, it is necessary to set different departure headways at different times (peak hours and off-peak hours) throughout the operation hours to meet different passenger flow demands. Therefore, in the process of transfer synchronization optimization, the departure headway of different periods is also ensured according to the passenger flow.

$$h^T + dh \leq D_{i+1} - D_i \leq h^T + dh$$

wherein $D_i$ is the departure time of train $i$, $h^T$ is the departure headway of train $i$ corresponding to time period $T$, and $dh$ is the adjustable range of the departure headway of train i in this time period.

For the transition phase from peak hours to off-peak hours (and vice versa), the departure headway needs to be within the range of the departure headways of peak hours and off-peak hours.

$$h^{oT} \leq D_{i+1} - D_i \leq h^{pT}$$

wherein $h^{pT}$ is the departure headway during peak hours, and $h^{oT}$ is the departure headway during off-peak hours.

In the actual operation process, there will be late arrival or early departure due to deviation. Therefore, in the actual adjustment process, it is necessary to perform statistics and analysis on arrival time and the departure time of the train on the target line, and adjust arrival time and the departure time of the train on the target line if necessary to improve the efficiency of the actual transfer synchronization.

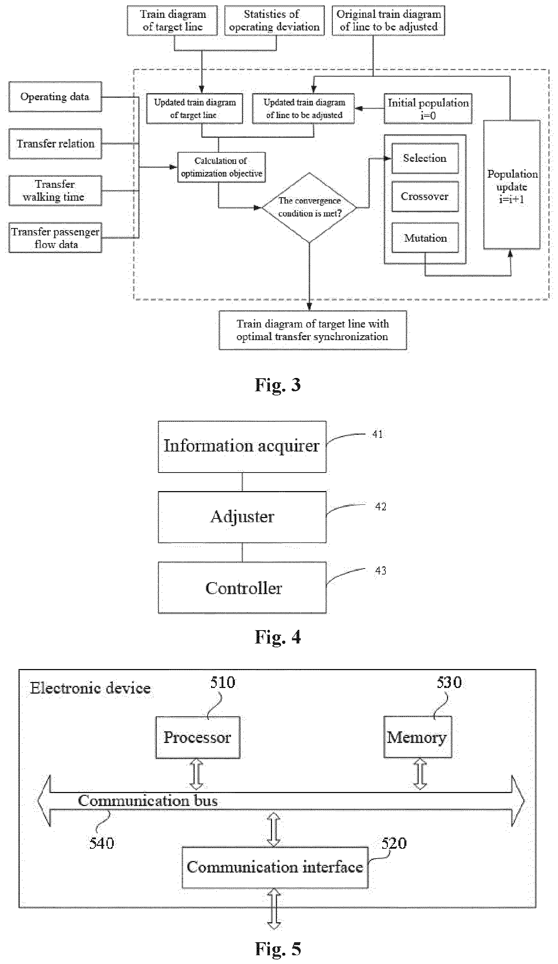

FIG. 3 is complete schematic flowchart of a passenger-oriented transfer synchronization optimization method according to an embodiment of the present application. In FIG. 3, For the train diagram of a target line, an updated train diagram of the target line is obtained by combining the operating deviation statistical data. For the original train diagram of a line to be adjusted, an updated train diagram of the line to be adjusted is obtained by combining the genetic algorithm. An optimization objective calculation is performed in combination with the updated train diagram of the target line, updated train diagram of the line to be adjusted, operation data, transfer relationship, transfer walking time, and transfer passenger flow data, and then whether the convergence condition is met is determined, if the convergence condition is met, the train diagram of the target line with the optimal transfer synchronization is obtained, otherwise, continue genetic algorithm is continued to be used to obtain updated train diagrams of the line to be adjusted. In the genetic algorithm, the population is firstly initialized to obtain the initial population i=0, and then operations such as selection, crossover and mutation are performed on the initial population to update the adjustment amount of arrival time and the departure time to update the population i=i+1. Wherein the selection operations may include tournament selection, elite selection, etc., the crossover operations may include SBX, and the mutation operations may include single-point mutation, etc.

The embodiments of the present application provide an optimization method for transfer synchronization of urban rail transit systems, with the following beneficial effects: 1) the needs of transfer passengers are fully considered, the average transfer waiting time of transfer passengers is taken as the optimization objective, and the transfer efficiency and service level for passengers in urban rail transit are improved; 2) in the process of model construction, various constraints in the actual operation process are fully considered, and a transfer-oriented mixed integer programming model with integrated train operation turnover is proposed; 3) an improved genetic algorithm is used to continuously confirm the feasibility of the offspring under constraints during the adjustment process to ensure the feasibility of the adjusted train diagram; 4) this algorithm can be combined with train diagram making software to improve the optimization efficiency of making train diagram, thereby enabling automatic improvement of transfer synchronization optimization and effectively shortening the time for optimization of the train diagram.

In the embodiments of the present application, it is proposed for the first time to automate the transfer synchronization optimization for the all-day train diagram. The passenger flow in the urban rail transit system is uneven in time. During making the train diagram, the diagram editors set different departure headways according to the passenger flow demand during peak hours and off-peak hours to meet the travel needs of passengers at different times. In the present application, the passenger flow demands at different times throughout the day are fully considered, and the all-day operation period is divided into several sections, and each section has a corresponding adjustable range of departure headway. In particular, a smooth transition for the departure headway during the transition phase is provided, so as to achieve the transfer synchronization optimization of all-day train diagram. In the process of constructing the mixed integer programming model, the constraints in the process of making the train diagram are fully considered, including train operation constraints, constraints on turnaround of train set, signal safety constraints, etc. In addition to the main line operation of the train, the operating conditions of the train at the switch-back station are also considered to ensure the practical feasibility of the optimized train diagram. Moreover, in the case of the cross-platform transfer, special consideration is given to the limitation of platform clearance time to avoid the occurrence of "just miss" and improve service quality.

As shown in FIG. 4, on the basis of the foregoing embodiments, an embodiment of the present application provides a passenger-oriented transfer synchronization optimization device, including: an information acquirer 41, an adjuster 42 and a controller 43, wherein

the information acquirer 41 is configured to obtain transfer-related information including line network topology information, train diagram information, train operating data, and passenger flow data at each transfer station;

the adjuster 42 is configured to take minimizing average waiting time of passengers as an optimization objective, and determine constraint conditions based on the transfer-related information; adjusting an arrival time and a departure time of each train on an original train diagram of lines to be adjusted, and determining an adjusted train diagram; and

the controller 43 is configured to control the trains on the lines to be adjusted based on the adjusted train diagram.

The function of each module in the passenger-oriented transfer synchronization optimization device according to the embodiment of the present application corresponds to the operation process of each step in the foregoing method embodiments, and the achieved effect is also consistent, both of which will not be repeated in the embodiment of the present application, please refer to the foregoing embodiments for details.

FIG. 5 illustrates a schematic diagram of the physical structure of an electronic device. As shown in FIG. 5, the electronic device may include: a processor 510, a communication interface 520, a memory 530, and a communication bus 540, wherein the processor 510, the communication interface 520, and the memory 530 communicate with each other through the communication bus 540. The processor 510 may call the logic instructions in the memory 530 to perform the passenger-oriented transfer synchronization optimization method, including: obtaining transfer-related information including line network topology information, train diagram information, train operating data, and passenger flow data at each transfer station; taking minimizing average waiting time of passengers as an optimization objective, and determining constraint conditions based on the transfer-related information; adjusting an arrival time and a departure time of each train on an original train diagram of lines to be adjusted, and determining an adjusted train diagram; and controlling the trains on the lines to be adjusted based on the adjusted train diagram.

In addition, the aforementioned logic instructions in the memory 530 may be implemented in the form of software functional units, and when sold or used as an independent product, may be stored in a computer readable storage medium. Based on such understanding, the technical solution of the present application or a part of the technical solution, which is essential or contributes to the related art, may be embodied in the form of a software product, which is stored in a storage medium, including several instructions to cause a computer device (which may be a personal computer, server, or network device, etc.) to perform all or part of the steps of the method according to each embodiment of the present application. The aforementioned storage media include: U disk, mobile hard disk, read-only memory (ROM), random access memory (RAM), magnetic disks, compact disks and other media that can store program codes.

On the other hand, an embodiment of the present application further provides a computer program product which includes a computer program stored in a non-transitory computer readable storage medium, the computer program includes program instructions, and when the program instructions are executed by a computer, the computer can perform the passenger-oriented transfer synchronization optimization method according to the foregoing method embodiments, the method including: obtaining transfer-related information which includes line network topology information, train diagram information, train operating data, and passenger flow data at each transfer station; taking minimizing average waiting time of passengers as an optimization objective, and determining constraint conditions based on the transfer-related information; adjusting an arrival time and a departure time of each train on an original train diagram of lines to be adjusted, and determining an adjusted train diagram; and controlling the trains on the lines to be adjusted based on the adjusted train diagram.

In yet another aspect, an embodiment of the present application further provides a non-transitory computer readable storage medium, in which a computer program is stored. When the computer program is executed by the processor, the passenger-oriented transfer synchronization optimization method according to the foregoing embodiments is performed, the method including: obtaining transfer-related information which includes line network topology information, train diagram information, train operating data, and passenger flow data at each transfer station; taking minimizing average waiting time of passengers as an optimization objective, and determining constraint conditions based on the transfer-related information; adjusting an arrival time and a departure time of each train on an original train diagram of lines to be adjusted, and determining an adjusted train diagram; and controlling the trains on the lines to be adjusted based on the adjusted train diagram.

The device embodiments described above are only schematic, wherein the units described as separate components may or may not be physically separated, and parts displayed as units may or may not be physical units, namely, they may be located in one place or, may be distributed to multiple network units. Some or all of the modules may be selected according to actual needs to achieve the purpose of the solution of this embodiment. It can be understood and implemented by a person of ordinary skill in the art without paying creative labor.

Through the description of the above embodiments, it can be clearly understood by those skilled in the art that each embodiment can be implemented by means of software plus a necessary general hardware platform, and of course, it can also be implemented by hardware. Based on this understanding, the essence or the part that contributes to the existing technology of the technical solutions mentioned above can be embodied in the form of software products, and the computer software products can be stored in computer readable storage media, such as ROM, RAM, magnetic disc, and compact disc. The software includes several instructions to enable a computer device (may be a personal computer, server, or network device, etc.) to perform the methods of various embodiments or some parts of the embodiments.

It should be noted that the embodiments are only for illustrating the technical solutions of the present application, rather than limiting them; although the present application has been described in detail with reference to the foregoing embodiments, those skilled in the art should understand that the technical solutions documented in the preceding embodiments may still be modified, or parts of the technical features thereof can be equivalently substituted; and such modifications or substitutions do not deviate from scope of the technical solutions of the embodiments of the present application.

**Claims**

1. A passenger-oriented transfer synchronization optimization method, comprising:

   obtaining transfer-related information including line network topology information, train diagram information, train operating data, and passenger flow data at each transfer station;
   taking minimizing average waiting time of passengers as an optimization objective, and determining constraint conditions based on the transfer-related information;
   adjusting an arrival time and a departure time of each train on an original train diagram of lines to be adjusted, and determining an adjusted train diagram; and
   controlling the trains on the lines to be adjusted based on the adjusted train diagram.

2. The passenger-oriented transfer synchronization optimization method of claim 1, wherein the taking minimizing average waiting time of passengers as an optimization objective, and determining constraint conditions based on the transfer-related information; adjusting an arrival time and a departure time of each train on an original train diagram of lines to be adjusted, and determining an adjusted train diagram comprises:

   taking minimizing average waiting time of passengers as an optimization objective, and determining constraint conditions based on the transfer-related information;
   determining an optimal adjustment amount of the arrival time and the departure time of each train on the original train diagram using genetic algorithm; and
   determining the adjusted train diagram based on the optimal adjustment amount of the arrival time and the departure time of each train on the original train diagram.

3. The passenger-oriented transfer synchronization optimization method of claim 2, wherein the determining an optimal adjustment amount of the arrival time and the departure time of each train on the original train diagram using a genetic algorithm comprises:

taking the arrival time and the departure time of each train on the original train diagram as an individual, the adjustment amount of the arrival time and the departure time of each train on the original train diagram as an individual gene, and the optimization objective as a fitness function, performing crossover operations on the individuals and performing mutation operations on the individuals to generate new populations; and

determining the individual gene in the population of a last generation to be the optimal adjustment amount of the arrival time and the departure time of each train when it is determined that a number of generated populations reaches a preset number or the populations of multiple adjacent generations have a same value of the fitness function.

4. The passenger-oriented transfer synchronization optimization method of claim 3, wherein the performing crossover operations on the individuals comprises:
performing crossover operations on the individuals based on a simulated binary crossover operator.

5. The passenger-oriented transfer synchronization optimization method of any one of claims 1 to 4, wherein the constraint conditions include train operation constraints;
the determining constraint conditions based on the transfer-related information comprises:

determining an interval running time limit and a stopping time limit in the train operation constraints based on an arrival time and a stopping time of the train at any station, and a departure time of the train at a previous station of the any station; and
determining a missed time limit in the train operation constraint conditions based on the departure time of the train on a connecting line at the transfer station and the arrival time of the train on a current line at the transfer station when a current transfer is determined to be a cross-platform transfer.

6. The passenger-oriented transfer synchronization optimization method of any one of claims 1 to 4, wherein the constraint conditions include constraints on turnaround of train set;
the determining constraint conditions based on the transfer-related information comprises:
for a switch-back station, determining the constraints on turnaround of train set based on the arrival time of the train after turning back at the switch-back station and the departure time of the train before turning back at the switch-back station.

7. The passenger-oriented transfer synchronization optimization method of any one of claims 1 to 4, wherein the constraint conditions include signal safety constraints;
the determining constraint conditions based on the transfer-related information comprises:
determining the signal safety constraints based on a departure headway of two adjacent trains on a same line.

8. A passenger-oriented transfer synchronization optimization device, comprising:

an information acquirer configured to obtain transfer-related information including line network topology information, train diagram information, train operating data, and passenger flow data at each transfer station;
an adjuster configured to take minimizing average waiting time of passengers as an optimization objective, and determine constraint conditions based on the transfer-related information; adjust an arrival time and a departure time of each train on an original train diagram of lines to be adjusted, and determine an adjusted train diagram; and
an controller configured to control the trains on the lines to be adjusted based on the adjusted train diagram.

9. An electronic device, comprising: a memory, a processor, and a computer program stored in the memory and executable by the processor, wherein steps of the passenger-oriented transfer synchronization optimization method according to any one of claims 1 to 7 are implemented when the processor executes the computer program.

10. A non-transitory computer readable storage medium, in which a computer program is stored, wherein steps of the passenger-oriented transfer synchronization optimization method according to any one of claims 1 to 7 are implemented when the computer program is executed by the processor.

| Obtaining transfer-related information including line network topology information, train diagram information, train operating data, and passenger flow data at each transfer station | S1 |

| Taking minimizing average waiting time of passengers as an optimization objective, and determining constraint conditions based on the transfer-related information; adjusting an arrival time and a departure time of each train on an original train diagram of lines to be adjusted, and determining an adjusted train diagram | S2 |

| Controlling the trains on the lines to be adjusted based on the adjusted train diagram | S3 |

**Fig. 1**

Down line L1

Platform 1

Transfer relation 1

Down line L3

Up line L4

Platform 2

Transfer relation 2

Up line L2

Transfer relation 1

Line 2

Line 1

Transfer relation 2

Transfer station

**Fig. 2**

Fig. 3

Fig. 4

Fig. 5

Europäisches
Patentamt

European
Patent Office

Office européen
des brevets

# EUROPEAN SEARCH REPORT

Application Number

EP 21 15 0795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JING-HUI ZHONG ET AL: "A Differential Evolution Algorithm With Dual Populations for Solving Periodic Railway Timetable Scheduling Problem", IEEE TRANSACTIONS ON EVOLUTIONARY COMPUTATION, IEEE SERVICE CENTER, NEW YORK, NY, US, vol. 17, no. 4, 1 August 2013 (2013-08-01) , pages 512-527, XP011522235, ISSN: 1089-778X, DOI: 10.1109/TEVC.2012.2206394 * abstract * * Section II. Problem Definition * * table VIII * * Section 3. Implementation of the Proposed DP-DE * * Section IV. Experiments and Comparisons * ----- | 1-4,6-10 | INV. B61L27/00 ADD. G06N3/12 |
| X | HASSANNAYEBI ERFAN ET AL: "Optimizing headways for urban rail transit services using adaptive particle swarm algorithms", PUBLIC TRANSPORT, SPRINGER BERLIN HEIDELBERG, BERLIN/HEIDELBERG, vol. 10, no. 1, 18 April 2017 (2017-04-18) , pages 23-62, XP036497203, ISSN: 1866-749X, DOI: 10.1007/S12469-016-0147-6 [retrieved on 2017-04-18] * abstract * * Section 3 Problem definition and formulation; figure 1 * * Section 6 Real-world implementation * * Section 7 Conclusion * ----- -/-- | 1-4,6-10 | TECHNICAL FIELDS SEARCHED (IPC) B61L G06N |

The present search report has been drawn up for all claims

| Place of search | Date of completion of the search | Examiner |
|---|---|---|
| Munich | 22 June 2021 | Pita Priegue, Miguel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 21 15 0795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU WENKAI ET AL: "Last Train Delay Management in Urban Rail Transit Network: Bi-objective MIP Model and Genetic Algorithm", KSCE JOURNAL OF CIVIL ENGINEERING, KOREAN SOCIETY OF CIVIL ENGINEERS, HEIDELBERG, vol. 22, no. 4, 1 April 2018 (2018-04-01), pages 1436-1445, XP037101462, ISSN: 1226-7988, DOI: 10.1007/S12205-017-1786-0 [retrieved on 2018-04-01] * abstract * * Section 2. Connections between Last Trains * * Section 3. Last Train Delay Management Model * * Section 4. Solution Algorithm * * Section 6. Conclusions * ----- | 1-10 | |
|  |  |  | TECHNICAL FIELDS SEARCHED (IPC) |

The present search report has been drawn up for all claims

| Place of search | Date of completion of the search | Examiner |
|---|---|---|
| Munich | 22 June 2021 | Pita Priegue, Miguel |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

**EP 3 992 057 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2020111921848